# EUROPÄISCHE PATENTSCHRIFT

(11) **EP 3 218 633 B1**
(45) Veröffentlichungstag und Bekanntmachung des Hinweises auf die Patenterteilung: **19.12.2018**
(21) Anmeldenummer: 15775126.4
(22) Anmeldetag: 21.09.2015
(51) Int. Cl.: F16L 57/06, F16L 11/127, G01N 27/10, E02F 7/10, G01N 27/20

(54) **FÖRDERSCHLAUCH**
CONVEYING HOSE
TUYAU DE TRANSPORT

(30) Priorität: 13.11.2014 DE 102014223170
(43) Veröffentlichungstag der Anmeldung: 20.09.2017
(73) Patentinhaber: ContiTech Schlauch GmbH, 30165 Hannover (DE)
(72) Erfinder: WIETZKE, Steffen, 31311 Uetze (DE); RECK, Siegfried, 31582 Nienburg (DE); VÖLXEN, Thomas, 34128 Kassel (DE); UHE, Jürgen, 34454 Bad Arolsen (DE)
(74) Vertreter: Finger, Karsten
(86) Internationale Anmeldenummer: PCT/EP2015/071527
(87) Internationale Veröffentlichungsnummer: WO 2016/074836

(56) Entgegenhaltungen:
- DE-A1- 3 140 804
- JP-B2- 3 440 658
- US-A- 5 084 679
- US-A- 5 634 497

## Beschreibung

Die Erfindung betrifft einen Förderschlauch.

In der Fördertechnik werden zum Transport von Fördergut, wie beispielsweise losem Gestein, Förderschläuche eingesetzt. Derartige Förderschläuche werden oftmals in Minen eingesetzt, in welchen sie beispielsweise abrasives Gestein als Fördergut transportieren. Wird ein abrasives Gestein als Fördergut auf einem Förderschlauch transportiert, so kann es bei dem Schlauchkörper des Förderschlauches, auf welchem das Fördergut aufliegt, aufgrund der starken Reibung des abrasiven Gesteins auf der radial innen liegenden Oberfläche des Förderschlauches bzw. des Schlauchkörpers des Förderschlauches zu einem Verschleiß des Schlauchkörpers kommen. Ist der Verschleiß stark fortgeschritten, indem beispielsweise Teile von einzelnen Schichten des Schlauchkörpers derart stark abgerieben sind, dass es aufgrund der dadurch reduzierten Dicke des Schlauchkörpers in diesen Bereichen zu einem Reißen des Schlauchkörpers kommen kann, da die Last des Fördergutes nicht mehr von dem Schlauchkörper getragen werden kann, kann es zu einem strukturellen Versagen des Schlauchkörpers und damit des Förderschlauches kommen. Ein Ziel ist es daher, möglichst frühzeitig derartige Verschleißerscheinungen feststellen zu können, um frühzeitig eingreifen zu können, bevor es zu einem derartigen strukturellen Versagen des Schlauchkörpers kommen kann.

Bisher erfolgt eine Verschleißprüfung des Förderschlauches jedoch meist lediglich durch eine optische Begutachtung durch den Bediener der Förderschlauchanlage, was insbesondere bei schwer zugänglichen Stellen des Förderschlauches schwierig und teilweise kaum durchführbar ist.

Aus der DE 31 40804 A1 ist ein flexibles Leitungsrohr aus einem gewellten metallischen Innenrohr und einem extrudierten Kunststoffmantel mit dazwischenliegender Korrosionsschutzschicht bekannt. Auf dem Innenrohr liegt mindestens ein elektrisch isolierter Metalleiter auf, dessen Isolationsschicht unbeständig gegenüber petrochemischen Fluiden ist. Der Meldeleiter ist wendelartig mit solcher Vorspannung aufgebracht, dass im Falle eines Lecks nach Auflösung, Zersetzung oder Erweichung der Isolierschicht ein elektrischer Kontakt zwischen dem Meldeleiter und dem Innenrohr bzw. zwischen den Meldeleitern hergestellt wird. Dieser Kurzschluss wird einer Überwachungsstation gemeldet und das Leck kann geortet werden.

Der Erfindung liegt daher die Aufgabe zugrunde, einen Förderschlauch zur Verfügung zu stellen, bei welchem eine automatisierte Verschleißprüfung des Schlauchkörpers realisierbar ist, wobei die automatisierte Verschleißprüfung des Schlauchkörpers ohne eine externe Energieversorgung ermöglicht werden soll. Die Aufgabe wird erfindungsgemäß mit einem Förderschlauch gemäß Anspruch 1 gelöst. Vorteilhafte Weiterbildungen der Erfindung sind in den Unteransprüchen beschrieben.

Der Förderschlauch gemäß der Erfindung weist einen Schlauchkörper zur Aufnahme eines zu transportierenden Fördergutes und eine Verschleißmesseinrichtung auf, wobei die Verschleißmesseinrichtung eine Signaleinheit, ein erstes, aus einem ersten Metallmaterial ausgebildetes Elektrodenelement und ein zweites, aus einem zweiten Metallmaterial ausgebildetes Elektrodenelement aufweist, wobei das erste Elektrodenelement und/oder das zweite Elektrodenelement in dem Schlauchkörper eingebettet sind und die Elektrodenelemente jeweils mit der Signaleinheit verbunden sind, wobei die Elektrodenelemente bei einem gleichzeitigen in Kontakt treten mit dem Fördergut eine galvanische Einheit zur Erzeugung einer an der Signaleinheit detektierbaren Spannung ausbilden.

Der Förderschlauch gemäß der Erfindung zeichnet sich somit insbesondere dadurch aus, dass dieser nunmehr eine Verschleißmesseinrichtung aufweist, welche eine automatisierte Messung eines Verschleißes des Schlauchkörpers des Förderschlauches ermöglicht und bei Detektieren eines Verschleißes einem Bediener der Förderschlauchanlage diesen anzeigt. Die Verschleißmesseinrichtung ist dabei derart ausgebildet, dass diese ohne eine externe Energieversorgung arbeiten kann. Erreicht wird dies dadurch, dass die Verschleißmesseinrichtung derart ausgebildet ist, dass sie zusammen mit dem zu transportierenden Fördergut eine galvanische Einheit in Form eines galvanischen Elementes bzw. einer galvanischen Zelle ausbilden kann. Die Funktion einer galvanischen Einheit beruht auf einer Redoxreaktion. Reduktion und Oxidation laufen räumlich getrennt in je einer Halbzelle ab. Das Verbinden der beiden Halbzellen mit einem Elektronenleiter und einem Ionenleiter schließt den Stromkreis. Die Spannung des elektrischen Stroms lässt sich durch die Nernst-Gleichung berechnen. Sie hängt von der Art der eingesetzten Metalle, der Konzentration in der Lösung der jeweiligen Halbzelle sowie der Temperatur ab. Im Gegensatz zur Elektrolyse, beispielsweise in der Galvanotechnik, kann in der galvanischen Einheit elektrische Energie gewonnen werden, während die Elektrolyse elektrische Energie verbraucht. An der Anode findet die Oxidation statt und an der Kathode die Reduktion. Die galvanische Einheit liefert solange eine Spannung bis das elektrochemische Gleichgewicht erreicht wird. Bei der Verschleißmesseinrichtung bildet das erste, aus einem Metallmaterial ausgebildete Elektrodenelement eine erste derartige Halbzelle aus und das zweite, aus einem zweiten Metallmaterial ausgebildete Elektrodenelement bildet eine zweite derartige Halbzelle aus. Als Ionenleiter dient das Fördergut selber, welches zusammen mit dem abrasiven Gestein mineral- und salzhaltiges Wasser bzw. Schlamm aufweist, welches bzw. welcher eine gute Leitung von Ionen zwischen den beiden von den zwei Elektrodenelementen ausgebildeten Halbzellen ausbilden kann. Als Elektronenleiter dient die Signaleinheit, welche mit beiden Elektrodenelementen verbunden ist. Die beiden Elektrodenelemente sind aus zwei unterschiedlichen Metallmaterialien ausgebildet, wobei das eine Metallmaterial edler ist als das andere Metallmaterial. Zumindest eines der beiden Elektrodenelemente ist in dem Schlauchkörper eingebettet, so dass zumindest eines der beiden Elektrodenelemente bei einem guten und somit intakten Zustand des Schlauchkörpers, das heißt, dass noch kein Verschleiß vorliegt, von dem Material des Schlauchkörpers, insbesondere einer Außenschicht des Schlauchkörpers, abgedeckt ist und somit noch nicht mit dem Fördergut in Kontakt kommen kann. Sobald eine zu starke Abrasion auf den Schlauchkörper durch das abrasive Gestein wirkt und dadurch die Außenschicht des Schlauchkörpers zumindest teilweise zerstört wird, kommt das eine oder die beiden unterhalb der Außenschicht liegenden Elektrodenelemente frei, so dass diese mit dem Fördergut in Kontakt kommen können. Sobald beide Elektrodenelemente gleichzeitig mit dem Fördergut in Kontakt kommen, kann die Verschleißmesseinrichtung zusammen mit dem Fördergut eine galvanische Einheit ausbilden, indem das mineral- und salzhaltige Wasser des Fördergutes als Elektrolyt wirkt und dadurch ein Strom zwischen den beiden Elektrodenelementen fließen kann und damit eine Spannung erzeugt werden kann, welche an der Signaleinheit detektierbar ist. Sobald eine Spannung an der Signaleinheit detektiert wird, kann diese Information an den Bediener der Förderschlauchanlage weitergegeben werden, so dass es für den Bediener der Förderschlauchanlage erkennbar ist, dass ein Verschleiß an dem Schlauchkörper vorliegt, so dass entsprechende Maßnahmen bzw. Vorkehrungen getroffen werden können. Die Verschleißmesseinrichtung kommt durch die Ausbildung einer galvanischen Einheit in Zusammenwirken mit dem Fördergut ohne eine zusätzliche Energieversorgung aus. Mittels der Erfindung ist somit eine Diagnose, insbesondere eine Ferndiagnose, eines Verschleißgrades des Schlauchkörpers eines Förderschlauches mit intrinsischer chemischer Energieversorgung möglich.

Um einen Verschleiß über die gesamte Länge des Schlauchkörpers messen zu können, ist es bevorzugt vorgesehen, dass sich die Elektrodenelemente jeweils über die Länge, insbesondere die Gesamtlänge, des Schlauchkörpers erstrecken. Dadurch kann an einer Vielzahl von Stellen über die Länge des Schlauchkörpers ein auftretender Verschleiß detektiert werden, so dass der gesamte Schlauchkörper der Verschleißprüfung unterliegen kann und damit frühzeitig entsprechende Vorkehrungen bei Auftreten eines Verschleißes getroffen werden können.

Es ist aber auch möglich, dass mindestens eines der beiden Elektrodenelemente sich nicht über die gesamte Länge des Schlauchkörpers erstreckt, sondern nur über einen Teillängenbereich des Schlauchkörpers. Beispielsweise kann eines der beiden Elektrodenelemente aus mehreren Einzelelektroden ausgebildet sein, welche jeweils an verschiedenen, zueinander beabstandeten Positionen entlang der Länge des Schlauchkörpers zumindest bereichsweise in das Fördergut hineinragen können, so dass diese dauerhaft in Kontakt mit dem Fördergut sein können. Beispielsweise kann auch eines der Elektrodenelemente aus einem oder mehreren Teilen einer Armatur des Förderschlauches ausgebildet sein, welche dauerhaft in Kontakt mit dem Fördergut ist. Bevorzugt ist es weiter vorgesehen, dass im Querschnitt des Schlauchkörpers gesehen die Elektrodenelemente gegenüberliegend zueinander angeordnet sind. Durch die gegenüberliegende Anordnung der beiden Elektrodenelemente im Querschnitt gesehen, können definierte Halbzellen, welche sich über den gesamten Querschnitt des Schlauchkörpers erstrecken, ausgebildet werden, welche durch das mineral- und salzhaltige Medium in Form von Wasser bzw. Schlamm des Fördergutes miteinander brückbar sind, so dass eine besonders sichere Wirkung der galvanischen Einheit erreicht werden kann. Es ist aber auch möglich, dass die beiden Elektrodenelemente im Querschnitt des Schlauchkörpers gesehen in einem Winkel < 180° zueinander, insbesondere unmittelbar benachbart zueinander, angeordnet sind.

Um ferner auch über den Umfang des Schlauchkörpers eine möglichst gleichmäßige Verteilung der Elektrodenelemente und damit eine gleichmäßige Messung des Verschleißes realisieren zu können, ist es weiter vorzugsweise vorgesehen, dass das erste Elektrodenelement und/oder das zweite Elektrodenelement helixförmig in dem Schlauchkörper eingebettet ist.

Dabei ist es weiter bevorzugt vorgesehen, dass das erste Elektrodenelement und das zweite Elektrodenelement jeweils derart helixförmig in dem Schlauchkörper eingebettet sind, dass sie eine Doppelhelixform ausbilden. Zur Ausbildung der Doppelhelixform sind die Elektrodenelemente vorzugsweise alternierend helixförmig innerhalb des Schlauchkörpers angeordnet. Hierdurch können die durch die Elektrodenelemente ausgebildeten Verschleißmesspunkte über den Umfang und die Länge des Schlauchkörpers erhöht werden, wodurch die Verschleißmessung weiter verbessert werden kann.

Die Elektrodenelemente können beispielsweise jeweils bandförmig oder drahtförmig ausgebildet sein, wodurch sie während des Herstellungsprozesses des Schlauchkörpers mit einem möglichst reduzierten Aufwand in den Schlauchkörper einbringbar sind und sich über die gesamte Länge des Schlauchkörpers erstrecken können, um möglichst viele Verschleißmesspunkte zur Verfügung stellen zu können.

Die für die Elektrodenelemente ausgewählten Metallmaterialien weisen vorzugsweise eine ausreichend hohe elektrochemische Potentialdifferenz aus, um eine ausreichend hohe Spannung bei in Kontakt kommen mit in dem mineral- und salzhaltigen Medium gelösten Ionen erreichen zu können und dadurch einen Stromfluss initiieren zu können.

Bevorzugt ist es dabei vorgesehen, dass das Metallmaterial des ersten Elektrodenelementes Kupfer, vorzugsweise Cu²⁺/Cu, und das Metallmaterial des zweiten Elektrodenelementes Magnesium, vorzugsweise Mg/Mg²⁺, enthält.

Alternativ kann es vorgesehen sein, dass das Metallmaterial des ersten Elektrodenelementes Kupfer, vorzugsweise Cu²⁺/Cu, und das Metallmaterial des zweiten Elektrodenelementes Aluminium, vorzugsweise Al/Al³+, enthält.

Weiter alternativ kann es vorzugsweise vorgesehen sein, dass das Metallmaterial des ersten Elektrodenelementes Kupfer, vorzugsweise Cu²⁺/Cu, und das Metallmaterial des zweiten Elektrodenelementes Zink, vorzugsweise Zn/Zn²⁺, enthält.

Weitere bzw. andersartige Kombinationen an Metallmaterialien für die beiden Elektrodenelemente sind jedoch auch denkbar.

Damit der Bediener der Förderschlauchanlage das Auftreten eines Verschleißes an dem Schlauchkörper möglichst schnell und eindeutig erkennen kann, ist es bevorzugt vorgesehen, dass die Signaleinheit eine Ausgabeeinheit aufweist, welche bei Detektion einer Spannung ein akustisches Signal und/oder ein visuelles Signal ausgibt. Das Signal dient als ein Warnsignal für den Bediener. Ein akustisches Signal kann beispielsweise in Form eines Warntones über einen Lautsprecher ausgegeben werden. Ein visuelles Signal kann beispielsweise über eine Anzeigevorrichtung oder eine Warnlampe, beispielsweise eine Leuchtdiode, ausgegeben werden. Die Ausgabeeinheit kann auch räumlich getrennt zu den übrigen Bestandteilen der Signaleinheit angeordnet sein, so dass die Ausgabeeinheit über vorzugsweise eine Funkverbindung in Verbindung mit der Signaleinheit steht, so dass über diese Funkverbindung Informationen zur Ausgabe eines Signals an die Ausgabeeinheit übermittelt werden können. Dies ist insbesondere dann vorteilhaft, wenn die Signaleinheit an einer für den Bediener schwer zugänglichen Position angeordnet ist und die Ausgabeeinheit in der Nähe der Position des Bedieners angeordnet werden kann.

Ist der Stromfluss innerhalb der Verschleißmesseinrichtung zu gering, kann es auch möglich sein, dass der Stromfluss über eine Schaltung, beispielsweise einen Transistor, welcher eine extern angebrachte aber nur im Signalfall benötigte Stromversorgung, beispielsweise durch eine Batterie, zur Verfügung stellt, verstärkt werden kann, um in der Ausgabeeinheit der Signaleinheit ein Signal zu erzeugen.

Nachfolgend wird die Erfindung unter Bezugnahme auf die anliegenden Zeichnungen anhand einer bevorzugten Ausführungsform näher erläutert. Es zeigen:
- Fig. 1: eine schematische Schnittdarstellung entlang einer Querrichtung eines Förderschlauches gemäß der Erfindung, wobei der Schlauchkörper des Förderschlauches in einem intakten Zustand ist,
- Fig. 2: eine schematische Schnittdarstellung entlang einer Längsrichtung des Förderschlauches gemäß der Erfindung, und
- Fig. 3: eine weitere schematische Schnittdarstellung entlang der Querrichtung des Förderschlauches gemäß der Erfindung mit an dem Schlauchkörper des Förderschlauches aufgetretenen Verschleißerscheinungen.

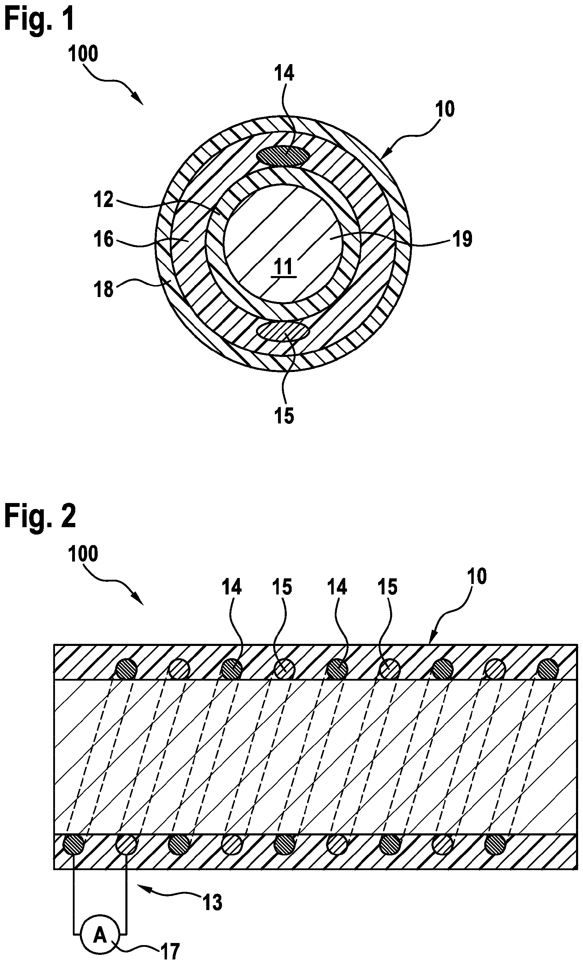

Fig. 1 zeigt einen Förderschlauch 100 geschnitten entlang einer Querrichtung des Förderschlauches 100.

Der Förderschlauch 100 weist einen Schlauchkörper 10 auf, welcher zu einem Rohr zusammengerollt ausgebildet ist und vorzugsweise aus einem elastischen Material, beispielsweise einem Gummimaterial, ausgebildet ist. Der Schlauchkörper 10 dient dazu, das zu transportierende Fördergut 11, beispielsweise abrasives Gestein, aufzunehmen, wobei dieses in dem durch die Rohrform gebildeten Innenraum 19 des Schlauchkörpers 10 angeordnet und in diesem transportiert wird. Der Innenraum 19 ist vollständig mit dem zu transportierenden Fördergut 11 ausgefüllt.

Der Schlauchkörper 10 weist mehrere Schichten auf, wobei der Schlauchkörper 10 mindestens eine radial innen liegende erste Außenschicht 12, eine radial außen liegende zweite Außenschicht 18 und eine zwischen den beiden Außenschichten 12, 18 angeordnete Innenschicht 16 aufweist. Die radial innen liegende erste Außenschicht 12 begrenzt den Innenraum 19 und ist damit in direktem Kontakt mit dem in dem Innenraum 19 angeordneten Fördergut 11.

Der Förderschlauch 100 weist ferner eine Verschleißmesseinrichtung 13 auf. In Fig. 1 sind ein erstes, aus einem ersten Metallmaterial ausgebildetes Elektrodenelement 14 und ein zweites, aus einem zweiten Metallmaterial ausgebildetes Elektrodenelement 15 der Verschleißmesseinrichtung 13 zu erkennen. Die beiden Elektrodenelemente 14, 15 sind in der Innenschicht 16 des Schlauchkörpers 10 eingebettet angeordnet, so dass die Elektrodenelemente 14, 15 von den beiden Außenschichten 12, 18 überdeckt sind und damit bei einem intakten Zustand des Schlauchkörpers 10, wie er in Fig. 1 gezeigt ist, nicht sichtbar sind.

Wie in Fig. 1 zu erkennen ist, sind die beiden Elektrodenelemente 14, 15 gegenüberliegend zueinander angeordnet.

Fig. 1 zeigt den Förderschlauch in einem derartigen intakten Zustand, bei welchem noch kein Verschleiß an dem Schlauchkörper 10 durch das Fördergut 11 aufgetreten ist, so dass die beiden Elektrodenelemente 14, 15 noch vollständig in dem Schlauchkörper 10 eingebettet sind und zwischen den Elektrodenelementen 14, 15 und dem Fördergut 11 die Außenschicht 12 des Schlauchkörpers 10 ausgebildet ist, so dass ein Kontakt zwischen den Elektrodenelementen 14, 15 und dem Fördergut 11 verhindert ist. In diesem Zustand kann dadurch auch noch kein Strom zwischen den beiden Elektrodenelementen 14, 15 fließen, so dass auch noch keine Spannung detektierbar ist, da das salz- und mineralhaltige Medium innerhalb des Fördergutes 11 noch nicht als Ionenleiter bzw. Ionenbrücke zwischen den beiden Elektrodenelementen 14, 15, welche jeweils eine Halbzelle ausbilden, fungieren kann.

Fig. 2 zeigt eine Schnittdarstellung des Schlauchkörpers 10 entlang seiner Längsrichtung und damit entlang seiner Länge, wobei der Schnitt durch die Innenschicht 16 des Schlauchkörpers 10 ausgebildet ist. Hierbei ist zu erkennen, dass die beiden Elektrodenelemente 14, 15 alternierend, insbesondere helixförmig alternierend, zueinander angeordnet sind, so dass sie eine Doppelhelixform ausbilden. Verbunden sind beide Elektrodenelemente 14, 15 mit einer Signaleinheit 17 der Verschleißmesseinrichtung 13, wobei diese Signaleinheit 17 eine Art Amperemeter oder Voltmeter ausbildet. An der Signaleinheit 17 kann, sobald es zu einem in Kontakt treten der Elektrodenelemente 14, 15 mit dem Fördergut 11 kommt und dadurch eine galvanische Einheit ausgebildet wird, eine durch den dadurch auftretenden Stromfluss zwischen den beiden Elektrodenelementen 14, 15 entstehende Spannung detektiert werden. Sobald eine Spannung an der Signaleinheit 17 detektiert wurde, kann über die Signaleinheit 17, insbesondere über eine Ausgabeeinheit der Signaleinheit 17, ein Signal, insbesondere ein Warnsignal, in Form eines akustischen Signals oder eines visuellen Signals ausgegeben werden, um dem Bediener der Förderschlauchanlage anzuzeigen, dass ein Verschleiß an dem Schlauchkörper 10 der Förderschlauches 100 aufgetreten ist und entsprechende Maßnahmen zu treffen sind.

Wie anhand von Fig. 2 zu erkennen ist, erstrecken sich die Elektrodenelemente 14, 15 dabei vorzugsweise über die gesamte Länge des Schlauchkörpers 10 und vorzugsweise auch über den gesamten Umfang des Schlauchkörpers 10. Die Elektrodenelemente 14, 15 können bandförmig oder drahtförmig ausgebildet sein.

Das Metallmaterial des ersten Elektrodenelementes 14 kann beispielsweise Kupfer, vorzugsweise Cu²⁺/Cu, enthalten. Das Metallmaterial des zweiten Elektrodenelementes 15 kann beispielsweise Magnesium, vorzugsweise Mg/Mg²⁺, oder Aluminium, vorzugsweise Al/Al³⁺, oder Zink, vorzugsweise Zn/Zn²⁺, enthalten.

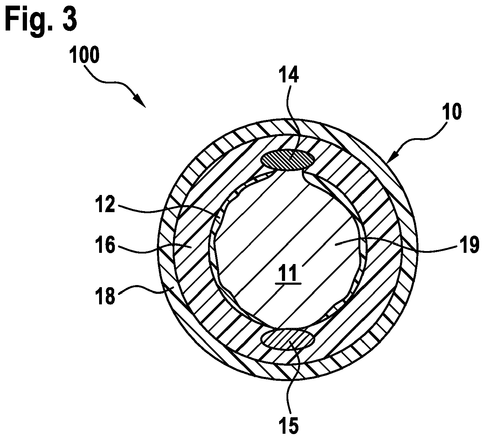

Fig. 3 zeigt den Förderschlauch 100 in einem Zustand, bei welchem ein Verschleiß derart stark aufgetreten ist, dass aufgrund einer abrasiven Wirkung des Fördergutes 11 die Außenschicht 12 des Schlauchkörpers 10 zumindest bereichsweise derart stark abgerieben worden ist, so dass die Elektrodenelemente 14, 15 zumindest bereichsweise freiliegen und damit in Kontakt mit dem Fördergut 11 und insbesondere dem salz- und mineralhaltigen Medium des Fördergutes 11 kommen. An dem Elektrodenelement 14, 15, welches das edlere Metallmaterial aufweist, kann dadurch die eine Redoxreaktion starten, wobei über die beiden durch die Elektrodenelemente 14, 15 ausgebildeten Halbzellen mit dem als Ionenleiter fungierenden salz- und mineralhaltigem Medium des Fördergutes 11 und der Signaleinheit 17, welche mit beiden Elektrodenelementen 14, 15 verbunden ist, ein Stromkreis geschlossen wird, durch welchen Strom fließen kann und dadurch eine Spannung an der Signaleinheit 17 detektierbar wird, wodurch ein Signal, insbesondere ein Warnsignal, an der Ausgabeeinheit der Signaleinheit 17 ausgegeben werden kann, um den an dem Schlauchkörper 10 aufgetretenen Verschleiß einem Bediener der Förderschlauchanlage anzeigen zu können.

### Bezugszeichenliste

### (Teil der Beschreibung)

- 100: Förderschlauch

- 10: Schlauchkörper
- 11: Fördergut
- 12: Erste Außenschicht
- 13: Verschleißmesseinrichtung
- 14: Erstes Elektrodenelement
- 15: Zweites Elektrodenelement
- 16: Innenschicht
- 17: Signaleinheit
- 18: Zweite Außenschicht
- 19: Innenraum

## Patentansprüche

1. Förderschlauch (100), mit
einem Schlauchkörper (10) zur Aufnahme eines zu transportierenden Fördergutes (11) und mit
einer Verschleißmesseinrichtung (13),
wobei die Verschleißmesseinrichtung (13)
eine Signaleinheit (17),
ein erstes, aus einem ersten Metallmaterial ausgebildetes Elektrodenelement (14) und
ein zweites, aus einem zweiten Metallmaterial ausgebildetes Elektrodenelement (15) aufweist,
wobei das erste Elektrodenelement (14) und/oder das zweite Elektrodenelement (15) in dem Schlauchkörper (10) eingebettet ist und
die Elektrodenelemente (14, 15) jeweils mit der Signaleinheit (17) verbunden sind, **dadurch gekennzeichnet, dass** die Elektrodenelemente (14, 15) bei einem gleichzeitigen in Kontakt treten mit dem Fördergut (11) eine galvanische Einheit zur Erzeugung einer an der Signaleinheit (17) ohne externe Energieversorgung detektierbaren Spannung ausbilden.

2. Förderschlauch (100) nach Anspruch 1,
wobei sich die Elektrodenelemente (14, 15) jeweils über die Länge des Schlauchkörpers (10) erstrecken.

3. Förderschlauch (100) nach Anspruch 1 oder 2,
wobei im Querschnitt des Schlauchkörpers (10) gesehen die Elektrodenelemente (14, 15) gegenüberliegend zueinander angeordnet sind.

4. Förderschlauch (100) nach einem der Ansprüche 1 bis 3,
wobei das erste Elektrodenelement (14) und/oder das zweite Elektrodenelement (15) helixförmig in dem Schlauchkörper (10) eingebettet ist.

5. Förderschlauch (100) nach Anspruch 4,
wobei das erste Elektrodenelement (14) und das zweite Elektrodenelement (15) jeweils derart helixförmig in dem Schlauchkörper (10) eingebettet sind, dass sie zusammen eine Doppelhelixform ausbilden.

6. Förderschlauch (100) nach einem der Ansprüche 1 bis 5,
wobei die Elektrodenelemente (14, 15) jeweils bandförmig oder drahtförmig ausgebildet sind.

7. Förderschlauch (100) nach einem der Ansprüche 1 bis 6,
wobei das Metallmaterial des ersten Elektrodenelementes (14) Kupfer und das Metallmaterial des zweiten Elektrodenelementes (15) Magnesium enthält.

8. Förderschlauch (100) nach einem der Ansprüche 1 bis 6,
wobei das Metallmaterial des ersten Elektrodenelementes (14) Kupfer und das Metallmaterial des zweiten Elektrodenelementes (15) Aluminium enthält.

9. Förderschlauch (100) nach einem der Ansprüche 1 bis 6,
wobei das Metallmaterial des ersten Elektrodenelementes (14) Kupfer und das Metallmaterial des zweiten Elektrodenelementes (15) Zink enthält.

10. Förderschlauch (100) nach einem der Ansprüche 1 bis 9,
wobei die Signaleinheit (17) eine Ausgabeeinheit aufweist, welche bei Detektion einer Spannung ein akustisches Signal und/oder ein visuelles Signal ausgibt.

## Claims

1. Conveying hose (100), comprising
a hose body (10) for receiving a material (11) which is to be transported, and comprising
a wear-measuring device (13),
wherein the wear-measuring device (13) has
a signal unit (17),
a first electrode element (14) which is formed from a first metal material, and
a second electrode element (15) which is formed from a second metal material,
**characterized in that** the first electrode element (14) and/or the second electrode element (15) are/is embedded in the hose body (10), and
the electrode elements (14, 15) are each connected to the signal unit (17),
**characterized in that** the electrode elements (14, 15), when they simultaneously come into contact with the material (11) being conveyed, form a galvanic unit for generating a voltage which can be detected at the signal unit (17) without an external energy supply.

2. Conveying hose (100) according to Claim 1,
wherein the electrode elements (14, 15) each extend over the length of the hose body (10).

3. Conveying hose (100) according to Claim 1 or 2,
wherein the electrode elements (14, 15) are arranged opposite one another as seen in cross section of the hose body (10).

4. Conveying hose (100) according to one of Claims 1 to 3,
wherein the first electrode element (14) and/or the second electrode element (15) are/is embedded in the hose body (10) in a helical manner.

5. Conveying hose (100) according to Claim 4,
wherein the first electrode element (14) and the second electrode element (15) are each embedded in the hose body (10) in a helical manner in such a way that they form a double helix shape together.

6. Conveying hose (100) according to one of Claims 1 to 5,
wherein the electrode elements (14, 15) are each formed in the shape of a strip or in the shape of a wire.

7. Conveying hose (100) according to one of Claims 1 to 6,
wherein the metal material of the first electrode element (14) contains copper, and the metal material of the second electrode element (15) contains magnesium.

8. Conveying hose (100) according to one of Claims 1 to 6,
wherein the metal material of the first electrode element (14) contains copper, and the metal material of the second electrode element (15) contains aluminum.

9. Conveying hose (100) according to one of Claims 1 to 6,
wherein the metal material of the first electrode element (14) contains copper, and the metal material of the second electrode element (15) contains zinc.

10. Conveying hose (100) according to one of Claims 1 to 9,
wherein the signal unit (17) has an output unit which, when a voltage is detected, outputs an acoustic signal and/or a visual signal

## Revendications

1. Tuyau de transport (100), comprenant
un corps de tuyau (10) pour recevoir un produit de transport à transporter (11) et comprenant
un dispositif de mesure de l'usure (13),
le dispositif de mesure de l'usure (13) présentant
une unité de signal (17),
un premier élément d'électrode (14) réalisé à partir d'un premier matériau métallique et
un deuxième élément d'électrode (15) réalisé à partir d'un deuxième matériau métallique,
le premier élément d'électrode (14) et/ou le deuxième élément d'électrode (15) étant noyés dans le corps de tuyau (10) et
les éléments d'électrode (14, 15) étant à chaque fois connectés à l'unité de signal (17),
**caractérisé en ce que**
les éléments d'électrode (14, 15), lorsqu'ils entrent simultanément en contact avec le produit de transport (11), constituent une unité galvanique pour générer une tension pouvant être détectée au niveau de l'unité de signal (17) sans alimentation extérieure en énergie.

2. Tuyau de transport (100) selon la revendication 1, dans lequel les éléments d'électrode (14, 15) s'étendent à chaque fois sur la longueur du corps de tuyau (10).

3. Tuyau de transport (100) selon la revendication 1 ou 2,
dans lequel, vus en coupe transversale à travers le corps de tuyau (10), les éléments d'électrode (14, 15) sont disposés à l'opposé l'un de l'autre.

4. Tuyau de transport (100) selon l'une quelconque des revendications 1 à 3,
dans lequel le premier élément d'électrode (14) et/ou le deuxième élément d'électrode (15) sont noyés en forme d'hélice dans le corps de tuyau (10) .

5. Tuyau de transport (100) selon la revendication 4, dans lequel le premier élément d'électrode (14) et le deuxième élément d'électrode (15) sont noyés à chaque fois en forme d'hélice dans le corps de tuyau (10), de telle sorte qu'ils constituent ensemble une forme en double hélice.

6. Tuyau de transport (100) selon l'une quelconque des revendications 1 à 5,
dans lequel les éléments d'électrode (14, 15) sont à chaque fois réalisés en forme de bande ou de fil.

7. Tuyau de transport (100) selon l'une quelconque des revendications 1 à 6,
dans lequel le matériau métallique du premier élément d'électrode (14) contient du cuivre et le matériau métallique du deuxième élément d'électrode (15) contient du magnésium.

8. Tuyau de transport (100) selon l'une quelconque des revendications 1 à 6,
dans lequel le matériau métallique du premier élément d'électrode (14) contient du cuivre et le matériau métallique du deuxième élément d'électrode (15) contient de l'aluminium.

9. Tuyau de transport (100) selon l'une quelconque des revendications 1 à 6,
dans lequel le matériau métallique du premier élément d'électrode (14) contient du cuivre et le matériau métallique du deuxième élément d'électrode (15) contient du zinc.

10. Tuyau de transport (100) selon l'une quelconque des revendications 1 à 9,
dans lequel l'unité de signal (17) présente une unité d'émission qui, à la détection d'une tension, émet un signal acoustique et/ou un signal visuel.
